# EUROPÄISCHE PATENTSCHRIFT

(11) **EP 0 840 684 B1**
(45) Veröffentlichungstag und Bekanntmachung des Hinweises auf die Patenterteilung: **06.12.2000**
(21) Anmeldenummer: 97917264.0
(22) Anmeldetag: 15.03.1997
(51) Int. Cl.: B60T 8/36

(54) **VERFAHREN UND VORRICHTUNG ZUR ANSTEUERUNG EINES MAGNETVENTILS**
METHOD AND DEVICE FOR ACTIVATING A SOLENOID VALVE
PROCEDE ET DISPOSITIF DE COMMANDE D'UNE VANNE ELECTROMAGNETIQUE

(30) Priorität: 17.05.1996 DE 19620037
(43) Veröffentlichungstag der Anmeldung: 13.05.1998
(73) Patentinhaber: ROBERT BOSCH GMBH, 70442 Stuttgart (DE)
(72) Erfinder: DODEN, Berend-Wilhelm, D-71640 Ludwigsburg (DE); FRIEDOW, Michael, D-71732 Tamm (DE); METTNER, Michael, D-71640 Ludwigsburg (DE); ÖHLER, Martin, D-74211 Leingarten (DE); HOHL, Günther, D-70569 Stuttgart (DE); LUDEWIG, Erich, D-70806 Kornwestheim (DE); SOMMER, Dietmar, D-71254 Ditzingen (DE)
(86) Internationale Anmeldenummer: DE9700532
(87) Internationale Veröffentlichungsnummer: WO9744225

(56) Entgegenhaltungen:
- DE-A- 4 236 047
- DE-A- 19 525 538

## Beschreibung

### Stand der Technik

Die Erfindung betrifft ein Verfahren und eine Vorrichtung zur Ansteuerung eines Magnetventils, gemäß den Oberbegriffen der unabhängigen Ansprüche.

Ein solches Verfahren und eine solche Vorrichtung zur Ansteuerung eines Magnetventils sind aus der DE-OS 38 05 031 (US 5 313 153) bekannt. Dort wird ein Verfahren und eine Vorrichtung zur Ansteuerung eines Magnetventils beschrieben, das eine Spule und einen beweglichen Anker umfaßt. Um den Anker in Bewegung zu setzen, wird die Spule mit Strom und/oder Spannung beaufschlagt. Hierzu wird die Spule mittels eines Schaltmittels getaktet mit einer Spannungsquelle verbunden.

Weiterhin zeigt DE-OS 42 36 047 eine hydraulische Bremsanlage mit elektromagnetisch betätigbaren Hydraulikventilen, die bei Ansteuerung mit einem Wechselsignal oder einer Pulsfolge für die Dauer der Ansteuersignals öffnen und eine von dem Ansteuersignal abhängige Dosierstellung einnehmen. Durch Variation der Frequenz bzw. des Pulsdauer-1 Pulspausenverhältnisses des Ansteuersignals wird ein gewünschter Durchflußquerschnitt eingestellt und damit der Gradient des Druckaufbaus geregelt.

Beim Einsatz von solchen Magnetventilen in Kraftfahrzeugen werden die Magnetventile mit unterschiedlichen Spannungen beaufschlagt. Dies bewirkt ein unterschiedliches Verhalten des Magnetventils bei verschiedenen Betriebszuständen. Ein definiertes Schalten der Magnetventile erfordert daher einen erhöhten Aufwand.

### Zeichnung

Die Erfindung wird nachstehend anhand der in der Zeichnung dargestellten Ausführungsformen erläutert. Figur 1 zeigt grob schematisch den Schaltungsaufbau zur Ansteuerung eines Magnetventils, Figur 2 die Ansteuersignale, Figur 3 in vereinfachter Darstellung den Aufbau des Magnetventils, Figur 4 und Figur 5 verschiedene Signale über der Zeit aufgetragen und Figur 6 ein Flußdiagramm.

Im folgenden wird die erfindungsgemäße Vorgehensweise am Beispiel eines Magnetventiles beschrieben, das zur Steuerung von Bremsflüssigkeit in einer ABSR-Hydraulik verwendet wird. Bei ABS-Systemen und/oder ASR-Systemen, wird die Hydraulikflüssigkeit mittels Magnetventilen gesteuert. Insbesondere kommen sogenannte integrierte Umschalt-/Druckbegrenzungsventile zum Einsatz, die je nach Regelstrategie den von einer Pumpe aufgebauten Druck schlagartig zu einem sogenannten Hauptbremszylinder entlasten, oder den Druck auf einen einstellbaren Wert begrenzt. Die schlagartige Druckentlastung ist mit einer störenden Geräuschentwicklung verbunden. Ein Ziel der Erfindung ist die Verringerung dieses Geräusches beim Schalten.

Die erfindungsgemäße Vorgehensweise ist aber nicht auf diese Anwendung beschränkt, sie kann bei allen elektromagnetischen Verbrauchern eingesetzt werden. Insbesondere kann sie bei Magnetventilen eingesetzt werden, mit denen die Kraftstoffzumessung in Brennkraftmaschinen gesteuert und/oder der Druck in Einspritzsystemen für Brennkraftmaschinen gesteuert und/oder begrenzt wird.

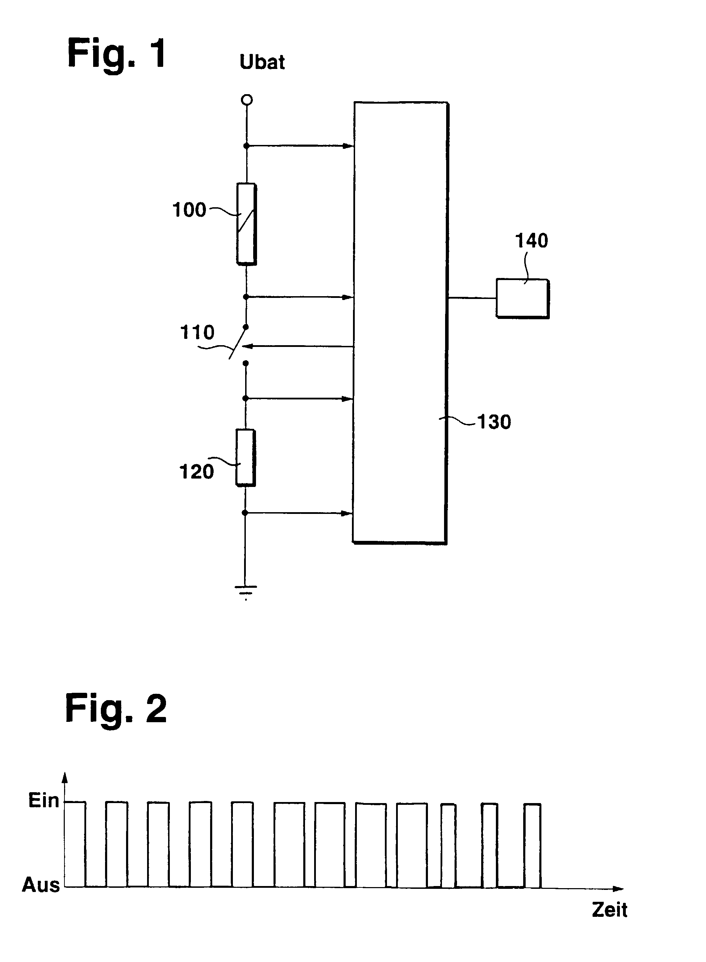

In Figur 1 sind die wesentlichsten Elemente der erfindungsgemäßen Vorrichtung dargestellt. Ein Verbraucher 100 steht mit seinem ersten Anschluß mit Versorgungsspannung Ubat in Verbindung. Sein zweiter Anschluß steht mit einem Schaltmittel 110 in Kontakt. Das Schaltmittel 110 verbindet den zweiten Anschluß des Verbrauchers über ein Widerstandsmittel 120 mit Masse. Der Verbraucher 100, das Schaltmittel 110 und das Strommeßmittel 120 sind in Reihe geschaltet. Die Reihenfolge der Bauelemente ist in Figur 1 beispielhaft dargestellt. Die Bauelemente können auch in anderer Reihenfolge geschaltet werden. Bei dem Verbraucher 100 handelt es sich vorzugsweise um die Spule eines Magnetventils. Das Schaltmittel 110 ist vorzugsweise als Transistor, insbesondere als Feldeffekttransistor realisiert.

Des weiteren ist eine Steuereinheit 130 vorgesehen, die verschiedene Signale von Sensoren 140 zugeführt bekommt. Ferner werden die Potentiale an den Eingängen des Verbrauchers 100 und des Strommeßmittels 120 der Steuereinheit 130 zugeleitet. Die Steuereinheit 130 beaufschlagt das Schaltmittel 110 mit Ansteuersignalen.

Ausgehend von den erfaßten Signalen der Sensoren 140, dies sind zum Beispiel Sensoren, die die Drehzahlen der einzelnen Räder erfassen, berechnet die Steuereinheit 130 Ansteuersignale zur Beaufschlagung des Schaltmittels 110. Dabei wird die Spannung U am Verbraucher 100 und/oder der Strom I, der durch den Verbraucher 100 fließt, erfaßt und ausgewertet. Der Strom I wird ausgehend von dem Spannungsabfall an dem Widerstandsmittel 120 bestimmt.

In Figur 2 ist das Ansteuersignal, mit dem das Schaltmittel 110 beaufschlagt wird, über der Zeit aufgetragen. Erfindungsgemäß erfolgt eine getaktete Ansteuerung. Dies bedeutet, das Signal geht mit einer vorgebbaren festen Frequenz von seinem niederen auf seinen hohen Pegel über, was zur Folge hat, daß das Schaltmittel 110 schließt und den Stromfluß freigibt. Nach einer vorgebbaren Zeit geht das Signal von seinem hohen auf seinen niederen Pegel zurück, was zur Folge hat, daß das Schaltmittel 110 öffnet. Vorzugsweise erfolgt das Einschalten mit einer solchen Frequenz, daß die verwendeten Ventile dieser Frequenz nicht mehr folgen können. Die Ventile reagieren daher auf das mittlere Ansteuersignal. Beispielsweise werden für die Frequenz Werte zwischen 1 und 2 Kilohertz gewählt. Das Verhältnis zwischen der Zeitdauer, in der das Signal einen hohen Pegel annimmt, und der Zeitdauer, in der das Signal einen niederen Pegel annimmt, wird als Tastverhältnis TV bezeichnet. Ausgehend von dem Tastverhältnis TV und der Versorgungsspannung Ubat ergibt sich die Spannung Ueff. Um den Einfluß der Versorgungsspannung auf die Spannung Ueff zu kompensieren wird bei der Vorgabe des Tastverhältnisses wenigstens die Versorgungsspannung Ubat berücksichtigt.

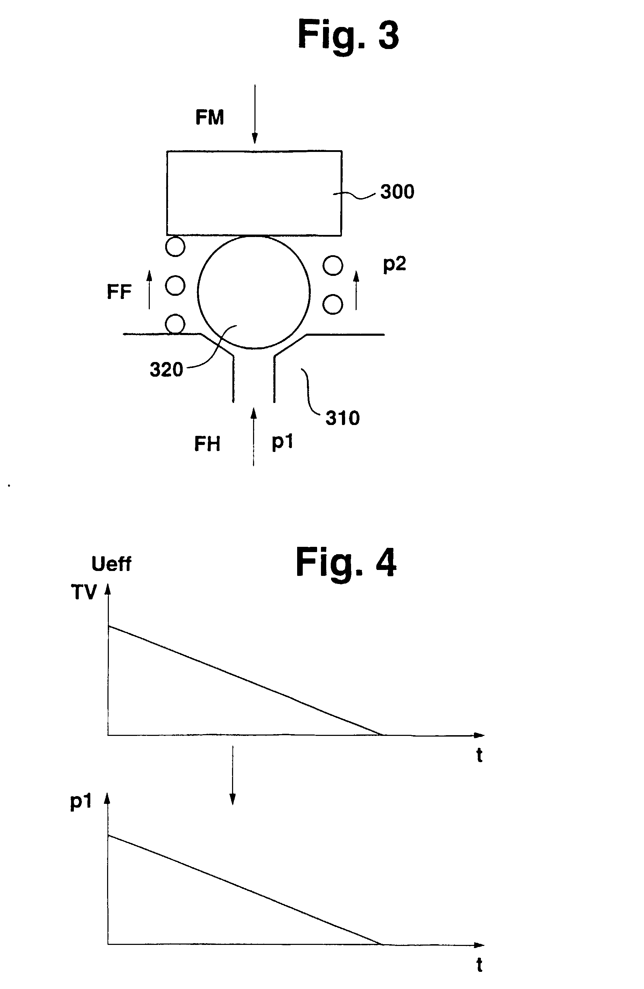

In Figur 3 sind die Kräfteverhältnisse im Magnetventil anhand einer Prinzipskizze dargestellt. Mit 300 ist ein Anker bezeichnet, auf den die Magnetkraft FM wirkt. Mit 310 ist ein Ventilsitz bezeichnet. Mit 320 ist eine Ventilnadel bezeichnet. Eine Feder 330 beaufschlagt den Anker mit einer Federkraft FF. Eine Hydraulikkraft FH beaufschlagt die Ventilnadel 320 und wirkt parallel zur Federkraft FF. Die Hydraulikkraft beruht auf dem Druckunterschied zwischen dem Druck P2 und dem Druck P1. In der Figur 3 beaufschlagt der Druck P1 die Ventilnadel von unten und der Druck P2 von oben. Die Magnetkraft FM wirkt entgegen der Federkraft FF und der Hydraulikkraft FH.

Befindet sich das Schaltmittel 110 in seiner geöffneten Stellung, so fließt kein Strom und die Magnetkraft nimmt den Wert Null an. In diesem Fall befindet sich das Magnetventil in seiner geöffneten Stellung, das heißt, die Ventilnadel 320 ist vom Ventilsitz 310 abgehoben und die Hyraulikflüssigkeit strömt durch den Zwischenraum zwischen Ventilsitz 310 und Magnetventilnadel 320.

Wird die Spule mit einer ausreichenden Spannung beaufschlagt, so wird die Magnetkraft FM größer als die Summe aus Federkraft und Hydraulikkraft. Dies bewirkt, daß die Feder 330 zusammengedrückt wird, und die Ventilnadel 320 auf dem Ventilsitz 310 aufschlägt und die Verbindung unterbricht.

Wird die Ansteuerung des Magnetventils schlagartig zurückgenommen, so entfällt die Magnetkraft FM schlagartig, und die Ventilnadel hebt plötzlich ab. Dies hat zur Folge, daß die Hydraulikflüssigkeit durch den Zwischenraum zwischen Ventilsitz 310 und Magnetventilnadel 320 hindurchströmen kann. Diese schlagartige Entlastung des Magnetventils ist mit einer störenden Geräuschentwicklung verbunden.

Um dies zu verhindern, wird wie folgt vorgegangen: Durch Pulsweitenmodulation des Ansteuersignals, das heißt durch Variation des Tastverhältnisses TV wird die effektive Ventilspannung Ueff rampenförmig zu Null verringert. Damit wird die Magnetkraft FM ebenfalls rampenförmig verringert. Dies hat zur Folge, daß der Druck gegen den das Ventil in seiner geschlossenen Stellung verbleiben kann, langsam absinkt. Das heißt, das Ventil beginnt zu öffnen.

Im Kräftegleichgewicht stehen die öffnende Hydraulikkraft FH, die Federkraft FF und die schließende Magnetkraft FM im Gleichgewicht. Damit ist die Geschwindigkeit des Druckabbaus und damit verbundene Geräuschentstehung einstellbar. In Figur 4 ist über der Zeit t die effektive Spannung Ueff bzw. das Tastverhältnis TV und der Druck P1 über der Zeit t aufgetragen.

Zum Öffnen des Magnetventils wird das Tastverhältnis von einem Ausgangswert, der erforderlich ist, um das Magnetventil in seinem geschlossenen Zustand zu halten, rampenförmig über der Zeit t auf Null zurückgenommen. Dies hat zur Folge, daß die effektiv am Magnetventil anliegende Spannung Ueff ebenfalls über der Zeit rampenförmig abnimmt. Entsprechendes gilt für den Druck P1, bei dem das Magnetventil noch in seiner geschlossenen Stellung bleibt. Erreicht dieser Druck den Druckwert, der im Hydrauliksystem herrscht, so hebt die Ventilnadel langsam ab und gibt den Fluß der Hydraulikflüssigkeit langsam frei. Durch weitere Verringerung des Tastverhältnisses hebt die Ventilnadel 320 weiter ab und vergrößert den wirksamen Öffnungsquerschnitt.

Bei der erfindungsgemäßen Ansteuerung wird die effektive Spannung Ueff über der Zeit derart variiert, daß sich der Ventilanker 300 und damit die Ventilnadel 320 langsam in Bewegung setzt. Hierzu wird vorzugsweise das Tastverhältnis rampenförmig verändert, das heißt, es fällt von seinem Ausgangswert linear über der Zeit auf Null ab. Anstelle des Tastverhältnisses können auch andere Größe, die einen Einfluß auf die Spannung Ueff besitzen, rampenförmig über der Zeit abgesenkt werden. Durch die langsame Bewegung ergibt sich keine schlagartige Freigabe der Hydraulikflüssigkeit und daher keine oder nur eine sehr geringe Geräuschemission. Bei dieser Art der Ansteuerung wirkt das Ventil als Schaltventil.

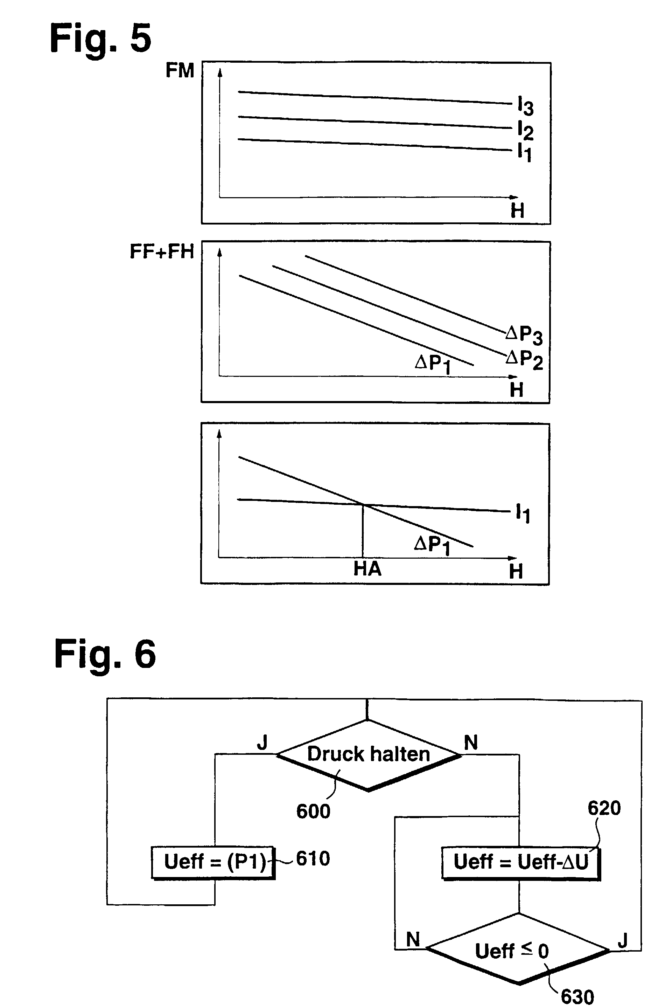

In Figur 5 sind verschiedene Kräfte über den Hub H der Magnetventilnadel 320 aufgetragen. Der Hub H gibt den Weg an, um den sich die Magnetnadel 320 bewegt.

In Teilfigur A ist die Magnetkraft FM für verschiedene Ströme I1, I2 und I3 über dem Hub H aufgetragen. Die Magnetkraft FM ist nahezu linear und konstant über dem Hub H. Sie nimmt nur gering zu größeren Hüben hin ab. Mit steigendem Strom nimmt die Magnetkraft zu.

In Teilfigur 5b ist die Summe aus Federkraft FF und Hydraulikkraft FH über dem Hub aufgetragen. Als Parameter wurde die Druckdifferenz ΔP zwischen dem Druck P1 und dem Druck P2 gewählt. Die Summe der Kräfte FF + FH ist im betrachteten Bereich nahezu linear. Dabei nimmt die Kraft mit wachsendem Hub H linear ab. Mit wachsender Druckdifferenz ΔP das heißt der Druck P1 ist größer als der Druck P2, nimmt die Summe der beiden Kräfte zu.

In Teilfigur 5c ist der Verlauf der Magnetkraft FM für einen festen Stromwert und die Summe der beiden Kräfte FF und FH für eine feste Druckdifferenz über dem Hub H aufgetragen. Die beiden Geraden schneiden sich in einem Punkt bei dem Hubwert HA. Dieser Schnittpunkt definiert einen Arbeitshub HA. Bei diesem Hub, dieser Druckdifferenz AP und diesem Strom I1 sind die Kräfte im Gleichgewicht.

Erfindungsgemäß wird das Tastverhältnis abhängig von dem Druck vorgegeben, bei dem das Magnetventil öffnen soll, das heißt die Ventilnadel abhebt. Bei bekannter Druckdifferenz ΔP zwischen den beiden Druckwerten P1 und P2 kann die effektive Spannung Ueff und damit der Stromwert I so gewählt werden, daß die Ventilnadel abhebt. Der Stromwert wird mittels des Tastverhältnisses eingestellt werden. Bei Ansteuerung mit einem bestimmten Tastverhältnis öffnet das Ventil bei einem bestimmten Druck.

Das Ventil wird erfindungsgemäß als Druckbegrenzungsventil betrieben. Hierzu wird abhängig von dem Druck PS, bei dem das Ventil öffnen soll, ein Tastverhältnis vorgegeben. Mit diesem Tastverhältnis wird die Spule beaufschlagt. Ist der Druck kleiner als der Wert PS, so ist die Summe der Kräfte FF und FH kleiner als die Magnetkraft FM und das Ventil ist geschlossen. Wird der Druck größer als der Wert PS, so wird die Summe der Kräfte FF und FH größer als die Magnetkraft FM und das Ventil öffnet. Bei dieser Art der Ansteuerung wirkt das Ventil als Druckbegrenzungsventil.

Aufgrund der getakteten Ansteuerung ist es möglich ein Ventil durch unterschiedliche Ansteuerung zum einen als Schaltventil und zum anderen als Druckbegrenzungsventil zu betreiben. Dadurch können erhebliche Kosten eingespart werden, wenn beispielsweise bei einem ABS-System, ASR-System oder einem FDR-System Schaltventile und Druckbegrenzungsventile benötigt werden. Durch eine geeignete Ansteuerung kann eines der Ventile eingespart werden.

In Figur 6 ist dies anhand eines Flußdiagrammes dargestellt. Eine erste Abfrage 600 überprüft, ob der Druck P1 gehalten werden soll, oder ob er abgebaut werden soll. Erkennt die Abfrage 600, daß der Druck nicht abgebaut werden soll, so wird das Ventil als Druckbegrenzungsventil angesteuert. Dies bedeutet in Schritt 610 wird das Tastverhältnis TV und damit die effektive Spannung Ueff derart vorgeben, daß das Ventil bei einem bestimmten Wert PS für den Druck P1 öffnet. Anschließend folgt Schritt 600.

Erkennt die Abfrage 600, daß der Druck abgebaut werden soll, so wird das Ventil als Schaltventil betrieben. Um das Ventil in seinen geöffneten Zustand zu bringen wird in Schritt 620 das Tastverhältnis TV und damit die Spannung Ueff am Ventil um einen bestimmten Wert ΔU verringert. Anschließend überprüft die Abfrage 630, ob der Wert der Spannung Ueff kleiner als ein vorgebbarer Wert, ist, bei dem das Ventil sicher geöffnet hat. Vorzugsweise wird überprüft ob das Tastverhältnis und damit die Spannung Ueff kleiner oder gleich Null ist. Ist dies nicht der Fall, so folgt erneut Schritt 620. Ist Ueff kleiner als der vorgegebene Wert, so folgt Schritt 600.

## Patentansprüche

1. Verfahren zur Ansteuerung eines Magnetventils, das eine Spule und einen beweglichen Anker umfaßt, wobei zur Bewegung des Ankers die Spule mit Strom und/oder Spannung beaufschlagt wird, wobei die Beaufschlagung getaktet mit einem vorgebbaren Tastverhältnis erfolgt, dadurch gekennzeichnet, daß das Magnetventil durch unterschiedliches Ansteuern wahlweise als Schaltventil oder als Druckbegrenzungsventil betreibbar ist.

2. Verfahren nach Anspruch 1, dadurch gekennzeichnet, daß beim Betrieb als Schaltventil das Tastverhältnis derart über der Zeit variiert wird, daß sich der Anker langsam in Bewegung setzt.

3. Verfahren nach Anspruch 1 oder 2, dadurch gekennzeichnet, daß das Tastverhältnis über der Zeit rampenförmig verändert wird.

4. Verfahren nach einem der vorhergehenden Ansprüche, daß das Tastverhältnis derart verändert wird, daß sich die am Ventil anliegende Spannung rampenförmig über der Zeit verändert.

5. Verfahren nach einem der vorhergehenden Ansprüche, dadurch gekennzeichnet, daß das Tastverhältnis derart vorgebbar ist, daß sich ein Kräftegleichgewicht zwischen einer Druckkraft, einer Rückstellkraft und einer einstellbaren Magnetkraft einstellt.

6. Verfahren nach einem der vorhergehenden Ansprüche, dadurch gekennzeichnet, daß beim Betrieb als Druckbegrenzungsventil das Tastverhältnis abhängig von einem Druck vorgebbar ist, bei dem das Magnetventil öffnen soll.

7. Vorrichtung zur Ansteuerung eines Magnetventils, das eine Spule und einen beweglichen Anker umfaßt, wobei zur Bewegung des Ankers die Spule mit Strom und/oder Spannung beaufschlagt wird, wobei die Beaufschlagung getaktet mit einem vorgebbaren Tastverhältnis erfolgt, dadurch gekennzeichnet, daß Mittel vorgesehen sind, die das Magnetventil durch unterschiedliches Ansteuern wahlweise als Schaltventil oder als Druckbegrenzungsventil betreiben.

## Claims

1. Method for activating a solenoid valve which comprises a coil and a movable armature, with current and/or voltage being applied to the coil to make the armature move and the current and/or voltage being applied in a pulsed manner with a predeterminable pulse duty factor, characterized in that the solenoid valve can be operated optionally as an on/off valve or as a pressure-limiting valve by activating it differently.

2. Method according to Claim 1, characterized in that during operation as an on/off valve the pulse duty factor is varied over time in such a way that the armature is slowly set in motion.

3. Method according to Claim 1 or 2, characterized in that the pulse duty factor is changed over time in a ramp-shaped manner.

4. Method according to one of the preceding claims, characterized in that the pulse duty factor is changed in such a way that the voltage applied to the valve changes over time in a ramp-shaped manner.

5. Method according to one of the preceding claims, characterized in that the pulse duty factor is predeterminable in such a way that an equilibrium of forces is established between a compressive force, a restoring force and an adjustable magnetic force.

6. Method according to one of the preceding claims, characterized in that during operation as a pressure-limiting valve the pulse duty factor is predeterminable according to a pressure at which the solenoid valve is to open.

7. Device for activating a solenoid valve which comprises a coil and a movable armature, with current and/or voltage being applied to the coil to make the armature move and the current and/or voltage being applied in a pulsed manner with a predeterminable pulse duty factor, characterized in that means which operate the solenoid valve optionally as an on/off valve or as a pressure-limiting valve by activating it differently are provided.

## Revendications

1. Procédé de commande d'une électrovanne comprenant une bobine et un induit mobile, la bobine recevant une intensité et/ou une tension pour déplacer l'induit, et l'alimentation est cadencée selon un rapport de travail prédéterminé,
caractérisé en ce qu'
on fait fonctionner l'électrovanne soit comme vanne de commutation, soit comme vanne de limitation de pression en la commandant différemment.

2. Procédé selon la revendication 1,
caractérisée en ce
pour le fonctionnement comme vanne de commutation, on modifie le rapport de travail en fonction du temps pour que l'induit se déplace lentement.

3. Procédé selon la revendication 1 ou 2,
caractérisé en ce qu'
on modifie le rapport de travail selon une forme de rampe en fonction du temps.

4. Procédé selon l'une quelconque des revendications précédentes,
caractérisé en ce qu'
on modifie le rapport de travail pour que la tension appliquée à la vanne varie selon une forme de rampe en fonction du temps.

5. Procédé selon l'une quelconque des revendications précédentes,
caractérisé en ce que
le rapport de travail est prédéterminé pour réaliser un équilibre des forces entre une force engendrée par une pression, une force de rappel et une force magnétique réglable.

6. Procédé selon l'une des revendications précédentes,
caractérisé en ce qu'
en fonctionnement comme vanne de limitation de pression, le rapport de travail est prédéterminé en fonction de la pression à laquelle l'électrovanne doit s'ouvrir.

7. Dispositif de commande d'une électrovanne comprenant une bobine et un induit mobile, la bobine étant alimentée en courant et/ou tension pour déplacer l'induit, et l'alimentation est cadencée selon un rapport de travail prédéterminé,
caractérisé en ce qu'
il comprend des moyens qui mettent en oeuvre l'électrovanne soit comme vanne de commutation, soit comme vanne de limitation de pression par une commande différente.
